# DEMANDE DE BREVET EUROPEEN

(11) **EP 3 502 826 A1**
(43) Date de publication de la demande: **26.06.2019**
(21) Numéro de dépôt: 18212471.9
(22) Date de dépôt: 13.12.2018
(51) Int. Cl.: G05F 1/67

(54) **CIRCUIT DE RECHERCHE DU POINT DE PUISSANCE MAXIMUM**

(30) Priorité: 21.12.2017 FR 1762712
(71) Demandeur: Commissariat à l'Energie Atomique et aux Energies Alternatives, 75015 Paris (FR)
(72) Inventeur: BERGOGNE, Dominique, 43140 SAINT DIDIER EN VELAY (FR)
(74) Mandataire: Cabinet Beaumont

(57) **Abrégé**

L'invention concerne un circuit (5) de recherche du point de puissance maximum, comportant un élément capacitif (C1) relié en parallèle sur une source d'énergie (1) et commandé par un interrupteur pour être périodiquement intégralement déchargé vers un étage (2) de transfert d'énergie dans lequel, à chaque cycle de commutation de l'interrupteur, celui-ci est fermé à un instant, fonction du courant de charge de l'élément capacitif lors de l'ouverture qui précède de l'interrupteur.

## Description

### Domaine

La présente description concerne de façon générale les dispositifs électroniques et, plus particulièrement, les systèmes de conversion d'énergie. La présente description concerne plus précisément les techniques de recherche du point de puissance maximum (MPPT - Maximum Power Point Tracking) dans un système de conversion dc/dc.

### État de l'art antérieur

Les circuits de recherche du point de puissance maximum sont largement utilisés dans les systèmes de conversion d'énergie, notamment dc/dc. On les retrouve en particulier dans les applications de conversion d'énergie provenant de batteries, de biopiles, etc. Un circuit de recherche du point maximum de puissance est généralement utilisé pour commander un convertisseur dc/dc.

La recherche du point de puissance maximum est classiquement gérée par des systèmes numériques à microcontrôleur exploitant des mesures de la tension aux bornes de la source d'énergie et du courant qu'elle fournit. Ces systèmes requièrent également le plus souvent une mesure de l'énergie requise par la charge.

On connaît du document WO 2012/090242 un circuit de recherche du point de puissance maximum qui prévoit de numériser la caractéristique courant-tension de la source d'énergie pour ensuite contrôler les cycles de commutation. Ce document s'applique à une source d'énergie de type panneaux photovoltaïques.

### Résumé

Un mode de réalisation réduit tout ou partie des inconvénients des techniques connues de recherche du point de puissance maximum dans des systèmes de conversion d'énergie.

Un mode de réalisation évite le recours à un microcontrôleur.

Ainsi, un mode de réalisation prévoit un circuit de recherche du point de puissance maximum, comportant un élément capacitif relié en parallèle sur une source d'énergie et commandé par un interrupteur pour être périodiquement intégralement déchargé vers un étage de transfert d'énergie, dans lequel, à chaque cycle de commutation de l'interrupteur, celui-ci est fermé à un instant, fonction du courant de charge de l'élément capacitif lors de l'ouverture qui précède de l'interrupteur.

Selon un mode de réalisation, la fermeture de l'interrupteur est provoquée lorsqu'une information représentative du courant de charge de l'élément capacitif atteint un seuil.

Selon un mode de réalisation, ledit seuil représente environ 20 % du courant de charge de l'élément capacitif lors de l'ouverture de l'interrupteur qui précède.

Selon un mode de réalisation, l'élément capacitif est périodiquement chargé jusqu'à approximativement quatre-vingts pour cent de sa charge maximale.

Selon un mode de réalisation, le circuit comporte une bascule de fourniture d'au moins un signal de commande à l'étage de transfert d'énergie.

Selon un mode de réalisation, le circuit comporte un premier comparateur du courant circulant dans l'élément capacitif pendant les périodes de charge par rapport à un seuil.

Selon un mode de réalisation, le circuit comporte un deuxième comparateur de la tension aux bornes de l'élément capacitif par rapport à zéro.

Selon un mode de réalisation, l'élément capacitif est relié en parallèle à une association en série d'un premier élément inductif de l'étage de transfert avec un commutateur.

Selon un mode de réalisation, l'élément capacitif est relié en parallèle à un pont mixte, un premier élément inductif de l'étage de transfert reliant deux bornes du pont.

Un mode de réalisation prévoit un système de transfert d'énergie comportant un circuit de recherche du point de puissance maximum.

Selon un mode de réalisation, le système comporte un étage inductif de transfert d'énergie, commandé par ledit circuit de recherche du point de puissance maximum.

Un mode de réalisation comporte un procédé de recherche du point de puissance maximum, dans lequel :
un élément capacitif, relié en parallèle à une source d'énergie, est à chaque cycle intégralement déchargé par transfert d'énergie vers une charge ;
une information représentative du courant de charge de l'élément capacitif est mesurée au début de chaque cycle de charge ; et
ladite information est comparée à un seuil pour déclencher la fin du cycle de charge.

Selon un mode de réalisation, ledit élément capacitif est périodiquement chargé à approximativement quatre-vingts pourcent de sa charge maximale.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation très schématique et sous forme de blocs d'un exemple de système de conversion d'énergie à recherche du point de puissance maximum ;
la figure 2 est un schéma électrique plus détaillé d'un mode de réalisation d'un circuit de recherche du point de puissance maximum de la figure 1 ;
les figures 3A, 3B et 3C illustrent, sous forme de chronogrammes, le fonctionnement du circuit de recherche du point de puissance maximum ;
la figure 4 est un exemple d'étage de commande d'un interrupteur de transfert d'énergie commandé par le circuit de la figure 2 ; et
la figure 5 représente, de façon très schématique et partielle, un mode de réalisation d'un circuit de recherche du point de puissance maximum plus particulièrement adapté à une source d'énergie alternative.

### Description détaillée

De mêmes éléments ont été désignés par de mêmes références aux différentes figures.

Par souci de clarté, seules les étapes et éléments utiles à la compréhension des modes de réalisation qui vont être décrits ont été représentés et seront détaillés. En particulier, la source d'énergie raccordée en amont du circuit de recherche du point de puissance maximum ainsi que la charge reliée en aval de ce circuit n'ont pas été détaillées, les modes de réalisation décrits étant compatibles avec les sources et charges usuelles pour lesquelles on souhaite utiliser un circuit de recherche du point de puissance maximum.

Sauf précision contraire, lorsque l'on fait référence à deux éléments connectés entre eux, cela signifie directement connectés sans élément intermédiaire autre que des conducteurs, et lorsque l'on fait référence à deux éléments reliés ou couplés entre eux, cela signifie que ces deux éléments peuvent être directement reliés (connectés) ou reliés par l'intermédiaire d'un ou plusieurs autres éléments.

Dans la description qui suit, lorsque l'on fait référence aux termes "approximativement", "environ" et "de l'ordre de" cela signifie à 10 % près, de préférence à 5 % près.

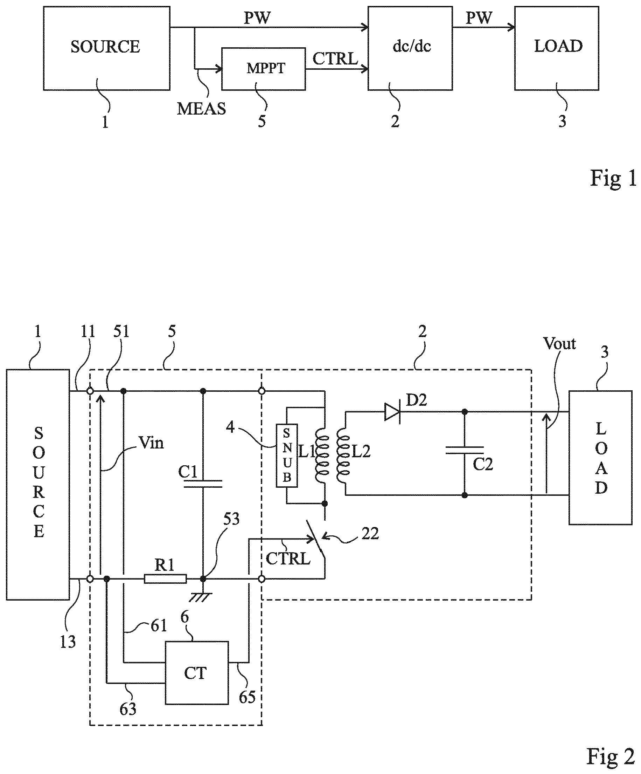

La figure 1 est une représentation très schématique et sous forme de blocs d'un exemple de système de conversion d'énergie à recherche du point de puissance maximum auquel s'appliquent, à titre d'exemple, des modes de réalisation qui vont être décrits.

Un tel système exploite une chaîne de conversion d'énergie comportant une source d'énergie (SOURCE) 1, un étage 2 de transfert ou de conversion d'énergie, par exemple continu/continu (dc/dc), et une charge 3 (LOAD). Un circuit 5 de recherche du point de puissance maximum (MPPT) est intercalé entre la source d'énergie 1 et l'étage de conversion 2. L'énergie PW transite de la source d'énergie vers l'étage de conversion 2. Cet étage 2 est commandé (signal ou signaux CTRL) par le circuit 5 de recherche du point de puissance maximum qui exploite une ou plusieurs mesures MEAS effectuées en entrée (côté source d'énergie).

La charge 3 est quelconque et peut être constituée de divers étages supplémentaires de conversion d'énergie.

La source d'énergie 1 est, de préférence, essentiellement résistive, c'est-à-dire qu'elle présente une résistance interne importante ou, en d'autres termes, qu'elle est susceptible de supporter une mise en court-circuit sans destruction. Il peut s'agir d'une batterie, d'une biopile, etc. En particulier, bien que l'on prenne par la suite principalement pour exemple une source d'énergie continue, les modes de réalisation décrits s'appliquent également à une source d'énergie alternative comme cela est précisé ultérieurement.

Dans la plupart des systèmes usuels, on utilise, entre la source d'énergie 1 et l'étage de conversion 2, un condensateur de lissage de la tension fournie par la source d'énergie. Le condensateur est dimensionné en fonction des caractéristiques de la charge et de la source d'énergie afin qu'il ne soit jamais déchargé et ne pas perdre sa fonction de lissage de la tension d'entrée. Un circuit usuel de recherche du point de puissance maximum exploite alors généralement une mesure de la tension à vide de la source d'énergie. Cela engendre des contraintes telles que le besoin d'un interrupteur pour déconnecter la source d'énergie du reste du système et permettre cette mesure à vide.

Les modes de réalisation décrits tirent leur origine d'une nouvelle analyse du fonctionnement possible d'une recherche du point de puissance maximum. En particulier, on ne tient pas compte des besoins de la charge pour effectuer un quelconque asservissement, mais on ne se préoccupe que de la source d'énergie et de ses éventuelles variations afin de fournir, à la charge, via l'étage de transfert 2, toujours la puissance maximale possible.

La figure 2 représente un schéma électrique d'un mode de réalisation d'un circuit 5 de recherche du point de puissance maximum, associé à un étage de transfert d'énergie 2 de type convertisseur dc/dc.

Deux bornes 51 et 53 du circuit 5 de recherche du point de puissance maximum sont reliées à deux bornes 11 et 13 de la source d'énergie 1 fournissant, dans cet exemple, une tension continue Vin, la borne 53 représentant la masse. Un condensateur C1 est connecté aux bornes 51 et 53. Par exemple, la borne 51 est connectée à la borne 11 tandis que la borne 53 est reliée, par un dispositif de mesure du courant (par exemple une résistance R1 de conversion courant tension), à la borne 13.

Les bornes 51 et 53 sont connectées en parallèle à une association en série d'un premier élément inductif L1 et d'un interrupteur 22 de l'étage 2. Les bornes de l'inductance L1 sont, de préférence, reliées par un circuit 4 d'atténuation des oscillations parasites (SNUB). Un tel circuit 4 est généralement constitué d'une diode dont l'anode est reliée par une résistance à une borne (celle connectée à l'interrupteur 22) de l'inductance L1 et dont la cathode est reliée, par un condensateur en parallèle avec une résistance, à l'autre borne de l'inductance L1 (celle connectée à la borne 11). L'élément inductif L1 est couplé à un deuxième élément inductif L2 constituant le secondaire de l'étage de transfert 2. L'élément inductif L2 est connecté aux bornes d'une association en série d'un élément de redressement, par exemple une diode D2, et d'un condensateur C2. Le condensateur C2 fournit, dans cet exemple, une tension continue Vout à la charge 3. Le rôle du condensateur C2 est de lisser la tension récupérée aux bornes du secondaire du transformateur L1/L2.

L'interrupteur 22 de l'étage 2 est commandé par un étage de commande 6 (CT) du circuit 5 de façon à ce que le condensateur C1 soit chargé jusqu'à un certain niveau, puis que l'énergie soit transférée à l'inductance L1, et ensuite transférée intégralement au secondaire du convertisseur 2. Deux bornes d'entrée 61 et 63 de l'étage 6 sont respectivement connectées aux bornes 51 et 13 et une borne de sortie 65 fournit le signal CTRL de commande de l'interrupteur 22. Les bornes 61 et 63 sont reliées à des éléments de mesure de l'étage 6. En particulier, l'information prélevée sur la borne 61 permet de déterminer lorsque la tension aux bornes du condensateur C1 s'annule et quand celui-ci est donc complètement déchargé. L'information prélevée sur la borne 63 permet, grâce à la résistance R1 constituant un convertisseur tension-courant, de mesurer une information représentative du courant fourni par la source 1.

Le fonctionnement du système représenté en figure 2 est le suivant. Lorsque l'énergie stockée dans le condensateur C1 est suffisante, l'interrupteur 22 est fermé et cette énergie est transférée à l'inductance L1 à la manière d'un circuit résonnant. Quand le transfert d'énergie vers l'inductance L1 est terminé, le condensateur C1 se trouve entièrement déchargé et la tension à ses bornes est nulle. La tension aux bornes de la source d'énergie 1 est alors également approximativement nulle (en négligeant la résistance R1). L'interrupteur 22 est alors ouvert, ce qui provoque un transfert de l'énergie accumulée dans l'inductance L1 vers le secondaire (inductance L2) pour être fournie à la charge 1, la tension étant redressée par la diode D2 et lissée par le condensateur C2. Dans le même temps, cette ouverture de l'interrupteur 22 démarre un nouveau cycle de charge du condensateur C1.

L'ouverture de l'interrupteur 22 s'effectue sans perte de commutation car elle s'effectue alors que la tension aux bornes du condensateur C1 est nulle et que le courant dans l'inductance L1 est également nul.

Le critère « suffisant » de l'énergie stockée dans le condensateur fait partie de la recherche du point de puissance maximum. On considère qu'en autorisant une décharge complète périodique du condensateur C1, le fait d'initier la décharge alors que ce condensateur est à environ 80 % de sa (tension de) charge maximale permet d'imposer, en sortie de la source d'énergie 1, une tension de valeur moyenne Vin/2, ce qui constitue un optimum en termes de transfert d'énergie. La charge maximale du condensateur correspond à une tension à ses bornes correspondant à la tension Vin (en négligeant la chute de tension dans la résistance R1).

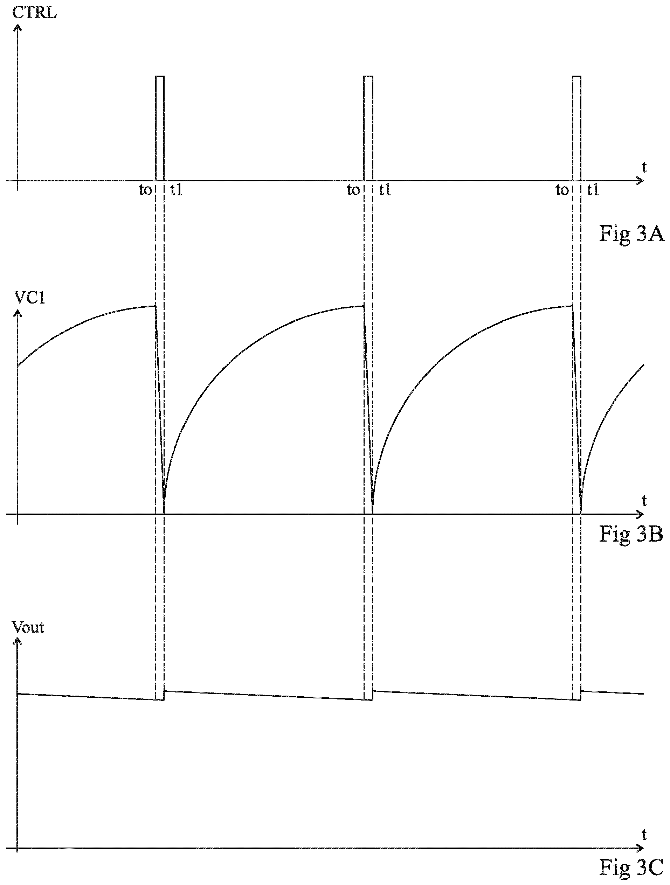

Les figures 3A, 3B et 3C illustrent par des chronogrammes le fonctionnement du circuit de recherche du point maximum de puissance 5 de la figure 2. On se place en régime permanent.

La figure 3A représente un exemple d'allure du signal CTRL de commande de l'interrupteur 22. On suppose, par exemple, un transistor MOS commandé en tout ou rien. La figure 3B illustre un exemple d'allure correspondante de la tension VC1 aux bornes du condensateur C1. La figure 3C illustre un exemple d'allure correspondante de la tension de sortie Vout aux bornes du condensateur C2.

A chaque instant t1 d'ouverture de l'interrupteur 22, le condensateur C1 débute un cycle de charge. L'allure de la charge du condensateur C1 est approximativement exponentielle. Pour cela, on suppose que l'on est en présence d'une source d'énergie principalement résistive et d'inductance négligeable devant sa résistance série. C'est en pratique le cas des batteries, des biopiles, etc. Quand (instant t0) la charge du condensateur C1 atteint environ 80 % de sa (tension de) charge maximale (80 % de Vin), l'étage 6 provoque la fermeture de l'interrupteur 22 le temps de transférer l'énergie stockée dans le condensateur C1 à l'inductance L1. Dès que la tension aux bornes du condensateur C1 s'annule, l'étage 6 provoque l'ouverture de l'interrupteur 22 pour initier un nouveau cycle de charge du condensateur C1. Du côté de la tension Vout (figure 3C), la tension remonte légèrement à chaque transfert d'énergie.

L'obtention du signal de commande à partir d'une détection de l'annulation de la tension aux bornes du condensateur C1 et de l'instant où il atteint 80 % de sa (tension de) charge maximale peut prendre diverses formes.

Le principe est d'évaluer le courant de charge du condensateur C1 lors du début de la charge, c'est-à-dire à l'ouverture (t1) de l'interrupteur 22, pour ensuite fermer cet interrupteur (t0) lorsque ce courant ne représente plus que 20 % de la valeur lors du début de la charge. En effet, le début de la charge du condensateur C1 s'effectue sous un courant maximal et ce courant décroit ensuite exponentiellement. En considérant que l'on est en présence d'une source d'énergie 1 d'impédance essentiellement résistive, la tension aux bornes du condensateur C1 atteint environ 80 % de la tension Vin lorsque le courant ne représente plus qu'environ 20 % du courant maximal (au début t1 du cycle de charge). Ainsi, en mesurant, à chaque ouverture de l'interrupteur 22, le courant initial de charge du condensateur C1, on peut aisément provoquer sa fermeture lorsque la tension de charge atteint 80 % de sa valeur maximale. En effet, il suffit de déterminer l'instant où le courant de charge ne représente plus qu'environ 20 %, de préférence 20 %, de la valeur initiale mesurée (diviser par cinq la valeur mesurée). Cela permet de garantir une charge à environ 80 % de la tension maximale à chaque cycle sans avoir besoin de connaître la tension à vide de la source d'énergie.

Selon un mode de réalisation, on utilise des moyens numériques de type microcontrôleur exploitant, à chaque cycle, la mesure du courant à l'instant d'ouverture t1 de l'interrupteur 22 pour déterminer l'instant auquel le fermer.

Selon un autre mode de réalisation préféré, on utilise des comparateurs analogiques associés à une bascule pour générer le signal de commande CTRL.

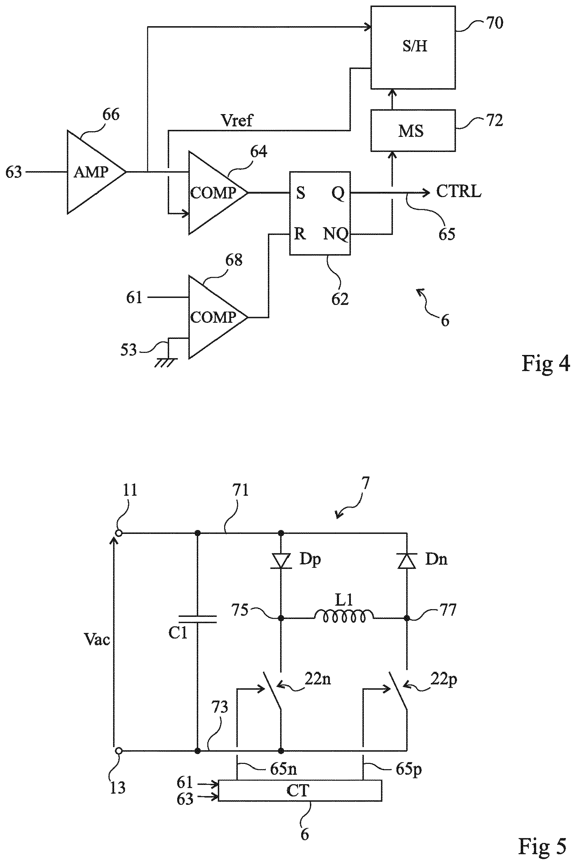

La figure 4 représente, de façon schématique un exemple d'étage 6 selon ce mode de réalisation.

Une bascule 62, par exemple de type RS fourni, par sa sortie directe Q, le signal CTRL de commande de l'interrupteur 22. On suppose le cas d'un interrupteur 22 commandé à la fermeture par un signal CTRL à l'état haut. Une entrée S de mise à un de la bascule 62 reçoit une information représentative du courant de charge du condensateur C1 par rapport à un niveau de référence Vref. Cette information est, par exemple, fournie par un comparateur 64 (COMP) dont une entrée est reliée, de préférence par l'intermédiaire d'un amplificateur 66 (AMP), à la borne 63 et reçoit donc une information représentative de la tension aux bornes de la résistance R1 qui est proportionnelle au courant dans le condensateur C1 pendant les cycles de charge. Une entrée de réinitialisation R de la bascule 62 reçoit une information représentative de l'annulation de la tension VC1 (instant t1) aux bornes du condensateur C1. Cette information est, par exemple, fournie par un comparateur 68 (COMP) dont une première entrée est reliée à la borne 61 et dont une deuxième entrée est connectée à la masse 53. La bascule 62 est donc réinitialisée (et l'interrupteur 22 est donc ouvert) à chaque fois que la tension VC1 s'annule. Le signal CTRL reste à l'état bas tant que l'entrée S de mise à un de la bascule 62 ne passe pas à l'état haut, c'est-à-dire tant que le courant dans le condensateur C1 n'atteint pas une valeur conditionnée par la valeur de la tension de référence Vref.

Afin que le point de basculement t0 corresponde toujours (à chaque cycle) à 80 % de la charge maximale, l'étage 6 comporte un échantillonneur bloqueur 70 (S/H) déclenché par l'ouverture de l'interrupteur 22 (sortie de l'amplificateur 66). Ce déclenchement peut être direct mais est, de préférence, obtenu par un circuit monostable (MS) 72 dont une entrée de déclenchement est connectée à la sortie inversée NQ de la bascule 62. Le circuit monostable 72 déclenche l'échantillonneur-bloqueur 70. L'échantillonneur-bloqueur 70 fournit le niveau de référence Vref, représentant 20 % de la valeur du courant mesurée au début du cycle de charge au comparateur 64. La comparaison de l'information représentative du courant de charge du condensateur C1 au seuil Vref représentant 20 % du courant de charge initial (donc 80 % de la tension de charge maximale atteinte au cycle précédent) s'effectue donc pendant tout le cycle de charge.

Le circuit décrit s'adapte à des variations de la tension à vide de la source d'énergie qui permettent de modifier la puissance fournie sans modifier le point de puissance maximum. Quand la tension continue fournie par la source d'énergie varie, cela se traduit par une variation de la valeur moyenne de la tension aux bornes du condensateur C1 (qui augmente si la tension Vin augmente) et un courant de décharge plus important dans l'inductance L1. Indépendamment de la fréquence des impulsions de fermeture de l'interrupteur 22, la valeur moyenne de la tension aux bornes du condensateur C1 va suivre l'évolution de la tension à vide pour rester à approximativement la moitié de celle-ci.

Le circuit décrit s'adapte également à des variations de la résistance interne de la source d'énergie afin de préserver un point de puissance maximum. Pour cela, la fréquence des impulsions de commande de l'interrupteur varie pour conserver une valeur moyenne de la tension VC1 aux bornes du condensateur C1 à approximativement la moitié de la tension à vide de la source d'énergie.

Bien que cela n'ait pas été illustré, une source d'alimentation auxiliaire fournit une tension d'alimentation à l'étage 6. Cette source d'alimentation extrait par exemple l'énergie nécessaire à son fonctionnement de la source 1 ou d'un condensateur auxiliaire en série avec une diode aux bornes du condensateur C1.

La figure 5 représente, de façon très schématique et partielle, un mode de réalisation d'un circuit de recherche du point de puissance maximum plus particulièrement adaptée à une source d'énergie alternative.

Ce mode de réalisation est basé sur l'utilisation d'un pont mixte 7 dont deux bornes 71 et 73 d'entrée alternative sont respectivement reliées aux bornes 11 et 13 auxquelles la source 1 (non représentée) fournit une tension alternative Vac. Deux bornes 75 et 77 de sortie redressée du pont 7 reçoivent les bornes de l'élément inductif L1. Deux interrupteurs 22n et 22p relient la borne 73 respectivement aux bornes 75 et 77. Deux diodes Dp et Dn relient la borne 71 respectivement aux bornes 75 et 77, l'anode de la diode Dp étant côté borne 71 et l'anode de la diode Dn étant côté borne 13. Les interrupteurs 22p et 22n sont commandés, respectivement pendant les alternances positives et négatives de la tension Vac, par des signaux 65p et 65n provenant du circuit 6. Pendant les alternances positives de la tension alternative Vac, un courant circule depuis la borne 11, dans la diode Dp, dans l'inductance L1 et dans l'interrupteur 22p (quand il est fermé). Pendant les alternances négatives de la tension Vac, un courant circule depuis la borne 13, dans l'interrupteur 22n (quand il est fermé), dans l'inductance L1 et dans la diode Dn. Pour simplifier, le reste du montage, en particulier le secondaire du transformateur inductif, n'a pas été représenté en figure 5. Il est identique à celui de la figure 2.

En variante, on intercale un pont redresseur entre la borne 13 de la figure 2 et la résistance R1 (on préfère effectuer le redressement côté borne 13 plutôt que côté borne 11 afin que la mesure du courant s'effectue aussi sur une tension redressée).

Un avantage des modes de réalisation décrits est qu'ils permettent un transfert d'énergie au point de puissance maximum d'une source d'énergie qui s'adapte à des variations de tension et d'impédance de cette source d'énergie.

Un autre avantage des modes de réalisation décrits est qu'ils sont compatibles avec une réalisation sans microcontrôleur.

Divers modes de réalisation ont été décrits. Diverses modifications apparaîtront à l'homme de l'art. En particulier, le dimensionnement des différents composants des circuits dépend de l'application et de la plage d'énergie à laquelle est destiné le système. En outre, la mise en oeuvre pratique des modes de réalisation qui ont été décrits est à la portée de l'homme du métier à partir des indications fonctionnelles données ci-dessus.

## Revendications

1. Circuit (5) de recherche du point de puissance maximum, comportant un élément capacitif (C1) relié en parallèle sur une source d'énergie (1) et commandé par un interrupteur (22) pour être périodiquement intégralement déchargé vers un étage (2) de transfert d'énergie, dans lequel, à chaque cycle de commutation de l'interrupteur, celui-ci est fermé (t0) à un instant, fonction du courant de charge de l'élément capacitif lors de l'ouverture (t1) qui précède de l'interrupteur.

2. Circuit selon la revendication 1, dans lequel la fermeture (t0) de l'interrupteur (22) est provoquée lorsqu'une information représentative du courant de charge de l'élément capacitif (C1) atteint un seuil (Vref).

3. Circuit selon la revendication 2, dans lequel ledit seuil (Vref) représente environ 20 % du courant de charge de l'élément capacitif lors de l'ouverture (t1) de l'interrupteur qui précède.

4. Circuit selon l'une quelconque des revendications 1 à 3, dans lequel l'élément capacitif (1) est périodiquement chargé jusqu'à approximativement quatre-vingts pour cent de sa tension de charge maximale.

5. Circuit selon l'une quelconque des revendications 1 à 4, comportant une bascule (62) de fourniture d'au moins un signal (65 ; 65p, 65n) de commande à l'étage de transfert d'énergie (2).

6. Circuit selon la revendication 5, comportant un premier comparateur (64) du courant circulant dans l'élément capacitif (C1) pendant les périodes de charge par rapport à un seuil.

7. Circuit selon la revendication 6, comportant un deuxième comparateur (66) de la tension aux bornes de l'élément capacitif (C1) par rapport à zéro.

8. Circuit selon l'une quelconque des revendications 1 à 7, dans lequel l'élément capacitif (C1) est relié en parallèle à une association en série d'un premier élément inductif (L1) de l'étage de transfert (6) avec un commutateur (22).

9. Circuit selon l'une quelconque des revendications 1 à 7, dans lequel l'élément capacitif (C1) est relié en parallèle à un pont mixte (7), un premier élément inductif (L1) de l'étage de transfert (6) reliant deux bornes du pont.

10. Système de transfert d'énergie comportant un circuit (5) selon l'une quelconque des revendications 1 à 9.

11. Système selon la revendication 10, comportant un étage inductif (6) de transfert d'énergie, commandé par ledit circuit (5).

12. Procédé de recherche du point de puissance maximum, dans lequel :
un élément capacitif (C1), relié en parallèle à une source d'énergie (1), est à chaque cycle, intégralement déchargé par transfert d'énergie vers une charge ;
une information représentative du courant de charge de l'élément capacitif est mesurée au début de chaque cycle de charge ; et
ladite information est comparée à un seuil (Vref) pour déclencher la fin du cycle de charge.

13. Procédé selon la revendication 12, dans lequel ledit seuil représente environ 20 % du courant au début du cycle de charge.

14. Procédé selon la revendication 12 ou 13, dans lequel ledit élément capacitif (C1) est périodiquement chargé à approximativement quatre-vingts pourcent de sa charge maximale.
